# EUROPEAN PATENT SPECIFICATION

(11) **EP 2 112 049 B1**
(45) Date of publication and mention of the grant of the patent: **16.03.2011**
(21) Application number: 09158778.2
(22) Date of filing: 24.04.2009
(51) Int. Cl.: B62C 3/00, B62D 13/02, B60G 21/055

(54) **Coach provided with a torsion stabilisator**
Kutsche mit Wankstabilisator
Chariot pourvu d'une barre stabilisatrice

(30) Priority: 25.04.2008 NL 2001530; 25.04.2008 NL 2001531
(43) Date of publication of application: 28.10.2009
(73) Proprietor: Verdonschot, Hendricus G. M., 5711 PH Someren (NL)
(72) Inventor: Verdonschot, Hendricus G. M., 5711 PH Someren (NL)
(74) Representative: Hatzmann, Martin

(56) References cited:
- EP-A- 0 225 851
- EP-A- 0 468 086
- EP-B- 0 122 527
- DE-C- 762 834
- JP-A- 5 032 115
- JP-A- 2003 112 510
- US-A- 3 194 336

## Description

### Field of the invention.

The invention relates to a carriage comprising a chassis as well as two front and rear wheels which are supported on bearings in or on wheel carriers which by way of wheel suspensions are spring-suspended from the chassis, the carriage further includes a sub-frame which is pivotably connected to the chassis by means of a turntable, as well as a steering apparatus which comprises a steering beam by means of which a horse or horses are coupled during use. The wheel carriers may be suspended from the chassis in a direct spring-mounted way, as is often the case with rear wheels, or spring-suspended from a sub-frame, which sub-frame is connected to the chassis as is often the case with front wheels.

### State of the art.

A carriage of this type is knownfrom EP-A-0 468 086. In the case of a fast change of direction during the ride the inner rear wheel may leave the ground during this operation.

### Summary of the invention.

It is an object of the invention to provide a carriage of the type defined in the opening paragraph with which the disadvantage described above does not present itself or at any rate presents itself to a lesser degree. To this end the carriage according to the invention is characterised in that the carriage is provided with a torsion stabiliser which comprises a torsion bar which is formed by a U-shaped beam which has a middle section and two legs which are each connected with a first end to the ends of the middle section and with the other, second end are connected to the wheel carriers of the front or rear wheels while the middle section is pivotably connected to the chassis. This torsion stabiliser counteracts the propensity of the carriage to lean over in the case of a sudden and fast change of direction. The result will be that the carriage will lean over less than the known carriage. The middle section of the torsion bar can then have a direct connection to the chassis or to a sub-frame.

It has turned out that in a carriage with turntable steering the effect of a stabiliser bar has a favourable effect on its stability.

An embodiment of the carriage according to the invention is characterised in that the carriage further includes two connecting rods which are each connected with a first end to the second ends of the legs of the torsion bar and with the second ends are connected to the wheel carriers of the front or rear wheels. Consequently, if there is a difference in height between the chassis to the middle section of which the torsion stabiliser is connected, and the wheel carriers, the torsion stabiliser can yet be present in a horizontal plane.

A further embodiment of the carriage according to the invention is characterised in that the connecting rods extend at right angles or substantially at right angles to the legs and to the middle section. In consequence, an imaginary axis running through the axles of the wheels, when the carriage is leaning over, continues to be at right angles to the direction of movement and does not end up at an angle (be it slight) to the direction of movement, which is undesired.

The connecting rods are preferably pivotably connected with the first ends to the second ends of the legs of the torsion bar. Furthermore, the connecting rods are preferably also pivotably connected with the second ends to the wheel carriers of the front or rear wheels.

A still further embodiment of the carriage according to the invention is characterised in that the wheel carriers at the front and/or rear are connected to each other by means of a rigid shaft, while the second ends of the connecting rods are connected to the rigid shaft.

Yet a further embodiment of the carriage according to the invention is characterised in that at least one of the wheel carriers is detachably connected to the torsion bar.

This provides that the torsion bar can be disabled, so that the carriage leans over more when bends in the road are taken. In certain circumstances it is desired indeed for the carriage to lean over. By rendering the torsion stabiliser such that it can be disabled, the carriage can be optimally adjusted to any situation.

Again a further embodiment of the carriage according to the invention is characterised in that the carriage further includes an oblong first element which is attached to the steering beam and is pivotably connected to the sub-frame, and a second element coupled to the first element and slidable relative to the first element in longitudinal direction of the first element, which second element is pivotably connected to the chassis in the place or vicinity of the turntable- It has turned out that especially with carriages which are provided with a steering delay, like the steering apparatus described above, the carriage leans over sooner and more than carriages without a steering delay. Therefore, it is particularly advantageous for a torsion stabiliser to be used on such carriages. Since the leaning over has so far turned out to be an unsurmountable problem with carriages of this type, these carriages were not used for specific purposes. As a result of the application of the torsion stabiliser according to the invention, carriages having a steering delay can now be used for these purposes as well, without causing any problems.

Preferably, on either one of the two sides of the turning point of the first element with the sub-frame, and at a distance from this turning point a damper is pivotably connected with one end to the sub-frame, the other ends of the dampers being pivotably connected to the first element between the turning point and the turntable.

Yet again a further embodiment of the carriage according to the invention is characterised in that the second element is detachably connected to the chassis and can be pivotably connected to the sub-frame. This provides that the steering delay can be disabled so that the carriage can be optimally set even for those purposes for which a steering delay is undesired.

### Brief description of the drawings.

The following description relating to the appended drawings, the whole given by way of non-limiting example of the carriage according to the invention, will provide better understanding of how the invention can be realised, in which:
Fig. 1 shows a perspective view of an embodiment of the torsion stabiliser of the carriage according to the invention;
Fig. 2 shows a side view of the torsion stabiliser shown in Fig. 1;
Fig. 3 shows a plan view of the front part of the carriage provided with a steering apparatus; and
Fig. 4 shows a plan view of the front part of a further embodiment of the carriage provided with a steering apparatus.

### Detailed description of the drawings

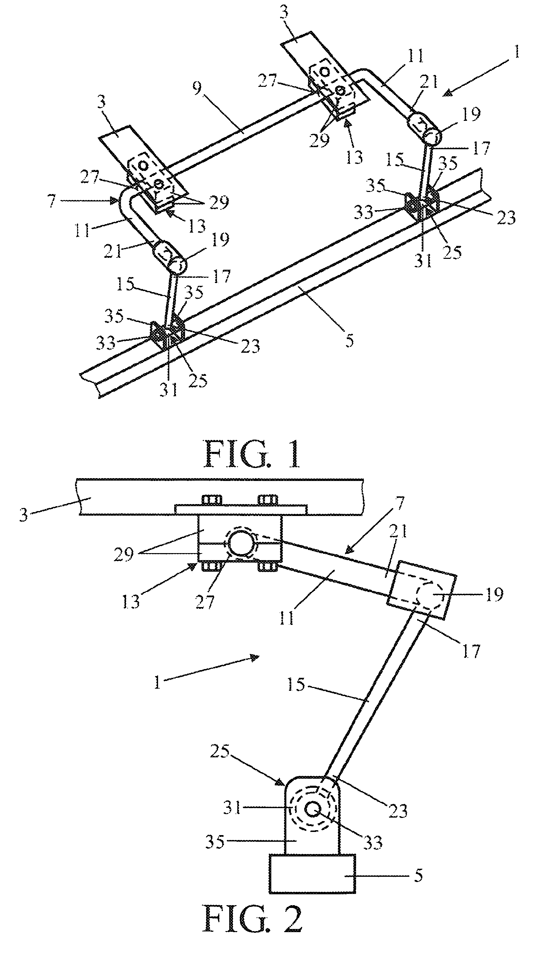

Figs. 1 and 2 show in a perspective view and side view respectively the torsion stabiliser 1 of the carriage according to the invention. The carriage has a chassis 3 of which not more than two minor component parts are depicted plus the front and rear wheels connected thereto. The rear wheels are supported in bearings in or on wheel carriers which are connected to each other by means of a rigid shaft 5. This rigid shaft is suspended from the chassis in a spring-mounted fashion (not shown).

The torsion stabiliser 1 comprises a torsion bar in the form of a U-shaped beam 7 with a middle section 9 and two legs 11 which are attached to the ends of the middle section. The middle section 9 is pivotably connected to the chassis 3 by means of fastening blocks 13. The torsion stabiliser 1 further has two connecting rods 15 which are each with a first end 17 pivotably connected by means of a ball joint 19 to the free ends 21 of the legs of the torsion bar and with the other, second ends 23 are pivotably connected by means of hinges 25 to the rigid shaft 5. The joint halves of one of the ball joints can be disassembled as a result of which the torsion bar is disengaged with one end from the rigid shaft 5 and no longer has any effect.

The fastening blocks 13 have rubber cylinders 27 which are attached to the middle section 9 of the beam 7 and are clamped down in block halves 29 of the fastening blocks 13. The hinges 25 have further rubber cylinders 31 which are fixed to shafts 33 which are connected to brackets 35 fixed to the rigid shaft 5. These rubber cylinders 31 are further connected to the connecting rods 15. The flexibility of these rubber cylinders 27 and 31 provides that the beam 7 and the connecting rods 15 are pivotable at a slight angle relative to the chassis 3 and the rigid shaft 5.

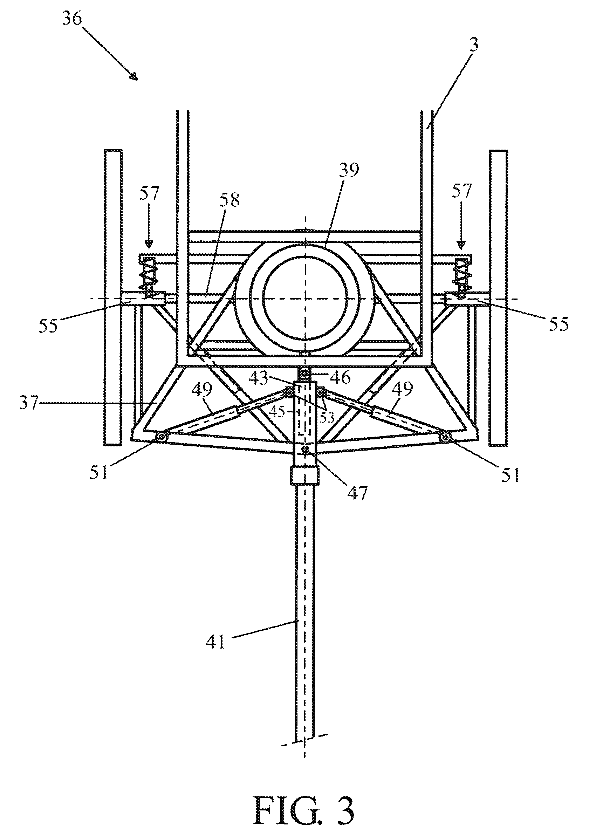

Fig. 3 shows in plan view the front part of the carriage. The carriage 36 has a sub-frame 37 which is connected to the chassis 3 by means of a turntable 39 and is provided with a steering apparatus. This steering apparatus has a pole 41 by which horses are coupled during use, and a first element 43, in this case in the form of a cylinder, which is attached to the steering beam and is pivotably connected to the sub-frame 37. A second element 45 slidable relative to the first element 43, which second element 45 here has the form of a piston that can be moved in the cylinder, is pivotably connected with a free end 46 to the chassis in the place of the turntable.

On either one of the two sides of the turning point 47 of the first element and the sub-frame and at a distance from this turning point an end 51 of a damper 49 is pivotably connected to the sub-frame 37. The dampers are pivotably connected with their other ends 53 to the first element 43 between the turning point 47 and the turntable 39.

The wheel carriers 55 are suspended from the sub-frame by means of shock absorbers with surrounding helical springs 57 and are connected to each other by means of a rigid shaft 58. In lieu of these shock absorbers with helical springs it is alternatively possible to use leaf springs or air springs.

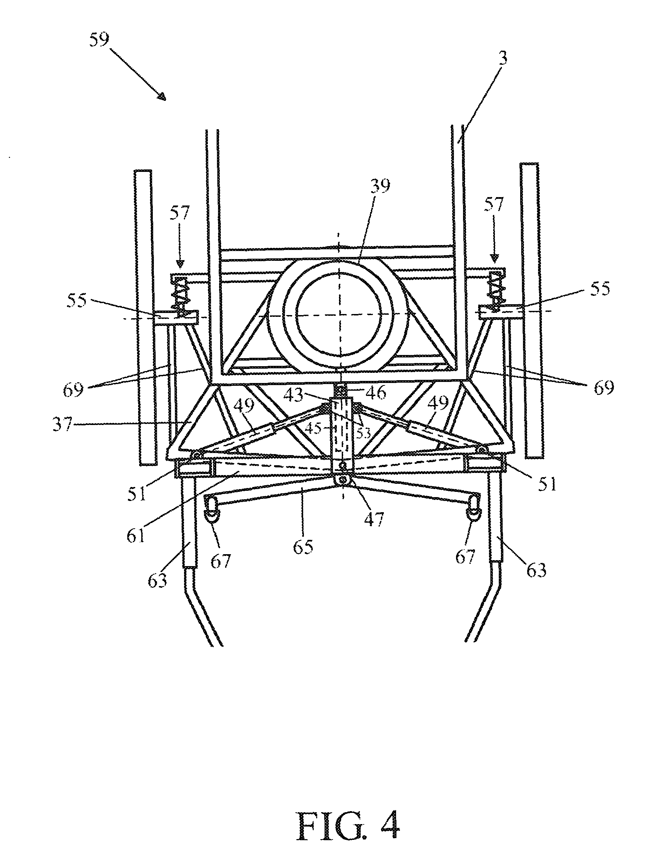

Fig. 4 shows a plan view of the front part of a further embodiment of the carriage. This carriage 59 is to be used as a one-horse carriage and has a steering beam 61 in lieu of a pole. The steering beam 61 extends transversely to the first element 43 and the first element is connected to the middle of the steering beam. At the ends of the steering beam there are coupling elements 63 present to which the harness of a horse can be coupled.

The carriage further includes a drawbar 65 which extends transversely to the direction of movement and is pivotably coupled in the middle to the steering beam 61.

The drawbar has at its ends further coupling elements 67 for harnessing a horse.

In this carriage 59 the wheel carriers 55 are suspended from the sub-frame independent of each other by means of arms 69, in lieu of being connected to each other by means of a rigid shaft.

Albeit the invention has been described in the forgoing based on the drawings, it should be observed that the invention is not by any manner or means restricted to the embodiment show in the drawings. The invention also extends to all embodiments deviating from the embodiment shown in the drawings within the spirit and scope defined by the claims. For example, the rear wheels may also be suspended independent of each other, the two ends of the legs of the torsion bar then being connected to the wheel carriers in lieu of being connected to a rigid shaft.

## Claims

1. A carriage comprising a chassis (3) as well as two front and back wheels which are supported in bearings in or on wheel carriers which by way of wheel suspensions are spring-suspended from the chassis, the carriage including a sub-frame (37) which is pivotably connected to the chassis (3) by means of a turntable (39), as well as a steering apparatus which comprises a steering beam (41) or pole (61) by means of which a horse or horses are coupled during use, **characterised in that** the carriage is provided with a torsion stabiliser (1) which comprises a torsion bar which is formed by a U-shaped beam (7) which has a middle section (9) and two legs (11) which are each connected with a first end to the ends of the middle section and with the other, second end are also connected to the wheel carriers of the front or rear wheels while the middle section (9) is pivotably connected to the chassis (3).

2. A carriage as claimed in claim 1, **characterised in that** the carriage further includes two connecting rods (15) which are each connected with a first end (17) to the second ends (21) of the legs of the torsion bar and with the second ends (23) are connected to the wheel carriers of the front or rear wheels.

3. A carriage as claimed in claim 2, **characterised in that** the connecting rods (15) extend at right angles or substantially at right angles to the legs (11) and to the middle section (9).

4. A carriage as claimed in claim 2 or 3, **characterised in that** the connecting rods (15) are pivotably connected with the first ends (17) to the second ends (21) of the legs of the torsion bar.

5. A carriage as claimed in claim 2, 3 or 4, **characterised in that** the connecting rods (15) with the second ends (23) are pivotably connected to the wheel carriers of the front or rear wheels.

6. A carriage as claimed in any one of the preceding claims 2 to 5, **characterised in that** the wheel carriers at the front and/or rear are connected to each other by means of a rigid shaft (5), while the second ends (23) of the connecting rods (15) are connected to the rigid shaft.

7. A carriage as claimed in any one of the preceding claims, **characterised in that** at least one of the wheel carriers is detachably connected to the torsion bar.

8. A carriage as claimed in any one of the preceding claims, **characterised in that** the carriage further includes an oblong first element (43) which is attached to the steering beam and is pivotably connected to the sub-frame (37), and a second element (45) coupled to the first element and slidable relative to the first element in longitudinal direction of the first element, which second element (45) is pivotably connected to the chassis (3) in the place or vicinity of the turntable (39).

9. A carriage as claimed in claim 8, **characterised in that** on either one of the two sides of the turning point (47) of the first element (43) with the sub-frame (37), and at a distance from this turning point a damper (49) is pivotably connected with one end (51) to the sub-frame, the other ends (53) of the dampers being pivotably connected to the first element (43) between the turning point (47) and the turntable (39).

10. A carriage as claimed in claim 8 or 9, **characterised in that** the second element (45) is detachably connected to the chassis (3) and can be pivotably connected to the sub-frame (37).

## Patentansprüche

1. Kutsche mit einem Chassis (3) sowie mit zwei Vorder- und Hinterrädern, die in Lagern in oder an Radträgern angeordnet sind, welche mittels Radaufhängungen an dem Chassis aufgehängt sind, wobei die Kutsche einen Unterrahmen (37), der mittels eines Drehtischs (39) schwenkbar mit dem Chassis (3) verbunden ist, sowie eine Lenkvorrichtung aufweist, die eine Lenkstange (41) oder einen Lenkbalken (61) aufweist, mittels derer bzw. dessen bei Benutzung ein oder mehrere Pferde eingespannt sind,
**dadurch gekennzeichnet, dass** die Kutsche mit einem Torsionsstabilisierer (1) versehen ist, der eine Torsionsstange aufweist, die aus einem U-förmigen Träger (7) mit einem Mittelabschnitt (9) und zwei Schenkeln (11) besteht, welche jeweils an einem ersten Ende mit den Enden des Mittelabschnitts verbunden sind und an dem anderen, zweiten Ende ferner mit den Radträgern der Vorder- oder Hinterräder verbunden sind, während der Mittelabschnitt (9) schwenkbar mit dem Chassis (3) verbunden ist.

2. Kutsche nach Anspruch 1, **dadurch gekennzeichnet, dass** die Kutsche ferner zwei Verbindungsstangen (15) aufweist, die jeweils an einem ersten Ende (17) mit den zweiten Enden (21) der Schenkel der Torsionsstange verbunden sind und an den zweiten Enden (23) mit den Radträgern der Vorder- oder Hinterräder verbunden sind.

3. Kutsche nach Anspruch 2, **dadurch gekennzeichnet, dass** die Verbindungsstangen (15) rechtwinklig oder im Wesentlichen rechtwinklig mit den Schenkeln (11) und dem Mittelabschnitt (9) verbunden sind.

4. Kutsche nach Anspruch 2 oder 3, **dadurch gekennzeichnet, dass** die Verbindungsstangen (15) an den ersten Enden (17) schwenkbar mit den zweiten Enden (21) der Schenkel der Torsionsstange verbunden sind.

5. Kutsche nach Anspruch 2, 3 oder 4, **dadurch gekennzeichnet, dass** die Verbindungsstangen (15) an den zweiten Enden (23) schwenkbar mit den Radträgern der Vorder- oder Hinterräder verbunden sind.

6. Kutsche nach einem der vorhergehenden Ansprüche 2 bis 5, **dadurch gekennzeichnet, dass** die Radträger an der Vorder- und/oder Rückseite mittels einer starren Stange (5) miteinander verbunden sind, wobei die zweiten Enden (23) der Verbindungsstangen (15) mit der starren Stange verbunden sind.

7. Kutsche nach einem der vorhergehenden Ansprüche, **dadurch gekennzeichnet, dass** mindestens einer der Radträger abnehmbar mit der Torsionsstange verbunden ist.

8. Kutsche nach einem der vorhergehenden Ansprüche, **dadurch gekennzeichnet, dass** die Kutsche ferner ein längliches erstes Element (43), das an der Lenkstange befestigt ist und schwenkbar mit dem Unterrahmen (37) verbunden ist, und ein zweites Element (45) aufweist, das mit dem ersten Element gekoppelt ist und relativ zu dem ersten Element in Längsrichtung des ersten Elements gleitbar ist, wobei das zweite Element (45) an dem Ort oder in der Nähe des Drehtischs (39) schwenkbar mit dem Chassis (3) verbunden ist.

9. Kutsche nach Anspruch 8, **dadurch gekennzeichnet, dass** an beiden der zwei Seiten des Drehpunkts (47) des ersten Elements (43) mit dem Unterrahmen (37) und in einem Abstand von diesem Drehpunkt ein Dämpfer (49) an einem Ende (51) schwenkbar mit dem Unterrahmen verbunden ist, wobei zwischen dem Drehpunkt (47) und dem Drehtisch (39) die anderen Enden (53) der Dämpfer schwenkbar mit dem ersten Element (43) verbunden sind.

10. Kutsche nach Anspruch 8 oder 9, **dadurch gekennzeichnet, dass** das zweite Element (45) abnehmbar an dem Chassis (3) befestigt ist und schwenkbar mit dem Unterrahmen (37) verbunden werden kann.

## Revendications

1. Chariot comprenant un châssis (3) ainsi que deux roues avant et arrière qui sont supportées dans des paliers dans où sur des supports de roue qui au moyen de suspensions de roue sont suspendus élastiquement depuis le châssis, le chariot incluant un cadre auxiliaire (37) qui est connecté à pivotement au châssis (3) au moyen d'un plateau de rotation (39), ainsi qu'un dispositif de direction qui comprend une poutre (41) ou une tige (61) de direction au moyen de laquelle un cheval ou des chevaux sont couplés pendant l'utilisation, **caractérisé en ce que** le chariot est pourvu d'un stabilisateur de torsion (1) qui comprend une barre de torsion qui est formée par une poutre en forme de U (7) qui a une section médiane (9) et deux pattes (11) qui sont chacune connectées avec une première extrémité aux extrémités de la section médiane et avec l'autre, seconde extrémité sont aussi connectées aux supports de roue des roues avant ou arrière alors que la section médiane (9) est connectée à pivotement au châssis (3).

2. Chariot selon la revendication 1, **caractérisé en ce que** le chariot comprend en outre deux tiges de connexion (15) qui sont chacune connectée avec une première extrémité (17) aux secondes extrémité (21) des pattes de la barre de torsion et avec les secondes extrémité (23) sont connectées aux supports de roue des roues avant ou arrière.

3. Chariot selon la revendication 2, **caractérisé en ce que** les tiges de connexion (15) s'étendent à angle droit ou sensiblement à angle droit par rapport aux pattes (11) et à la section médiane (9).

4. Chariot selon la revendication 2 ou 3, **caractérisé en ce que** les tiges de connexion (15) sont connectées à pivotement avec les premières extrémités (17) aux secondes extrémités (21) des pattes de la barre de torsion.

5. Chariot selon la revendication 2, 3 ou 4, **caractérisé en ce que** les tiges de connexion (15) avec les secondes extrémités (23) sont connectées à pivotement aux supports de roue des roues avant ou arrière.

6. Chariot selon l'une quelconque des revendications 2 à 5, **caractérisé en ce que** les supports de roue à l'avant et/ou à l'arrière sont connectés ensemble au moyen d'un axe rigide (5), alors que les secondes extrémités (23) des tiges de connexion (15) sont connectées à l'axe rigide.

7. Chariot selon l'une quelconque des revendications précédentes, **caractérisé en ce qu'**au moins l'un des supports de roue est connecté de manière détachable à la barre de torsion.

8. Chariot selon l'une quelconque des revendications précédentes, **caractérisé en ce que** le chariot inclut en outre un premier élément oblong (43) qui est fixé sur la poutre de direction et est connecté à pivotement au cadre auxiliaire (37), et un second élément (45) couplé au premier élément et pouvant coulisser par rapport au premier élément dans la direction longitudinale du premier élément, lequel second élément (45) est connecté à pivotement au châssis (3) à l'emplacement ou au voisinage du plateau de rotation (39).

9. Chariot selon la revendication 8, **caractérisé en ce que** sur les deux côtés du point de rotation (47) du premier élément (43) avec le cadre auxiliaire (37), et à une certaine distance de ce point de rotation un amortisseur (49) est connecté à pivotement avec une extrémité (51) au cadre auxiliaire, les autres extrémité (53) des amortisseurs étant connectées à pivotement au premier élément (43) entre le point de rotation (47) et le plateau de rotation (39).

10. Chariot selon la revendication 8 ou 9, **caractérisé en ce que** le second élément (45) est connecté de manière détachable au châssis (3) et peut être connecté à pivotement au cadre auxiliaire (37).
